# FASCICULE DE BREVET EUROPEEN

(11) **EP 3 353 986 B1**
(45) Date de publication et mention de la délivrance du brevet: **13.03.2019**
(21) Numéro de dépôt: 16781511.7
(22) Date de dépôt: 20.09.2016
(51) Int. Cl.: H04L 29/06, H04L 29/08

(54) **PROCEDE DE CONNEXION SECURISE, DEPUIS UN EQUIPEMENT INFORMATIQUE CLIENT, A UNE RESSOURCE INFORMATIQUE**
VERFAHREN ZUR SICHEREN VERBINDUNG VON EINER CLIENT-COMPUTERVORRICHTUNG ZU EINER COMPUTERRESSOURCE
METHOD FOR SECURE CONNECTION FROM A CLIENT COMPUTER DEVICE TO A COMPUTER RESOURCE

(30) Priorité: 21.09.2015 FR 1558890
(43) Date de publication de la demande: 01.08.2018
(73) Titulaire: Wallix, 75008 Paris (FR)
(72) Inventeur: ADDA, Serge, 92160 Antony (FR); ZHOU, Raphaël, 94600 Choisy Le Roi (FR)
(74) Mandataire: IP Trust
(86) Numéro de dépôt international: PCT/FR2016/052372
(87) Numéro de publication internationale: WO 2017/051104

(56) Documents cités:
- EP-A1- 2 894 814
- EP-A2- 1 523 152
- US-A1- 2013 191 627

## Description

### Domaine de l'invention

La présente invention concerne le domaine des serveurs d'application, et plus particulièrement des procédés et des systèmes d'accès à des ressources applicatives hébergés sur un ou plusieurs serveurs, par un utilisateur.

### Etat de la technique

On connaît en particulier dans l'état de la technique la demande de brevet européen EP2894814 un procédé de surveillance d'une session sur un système cible.

Un agent transitoire spécifique pour la surveillance de la session est installé sur le système cible lors de la réception de la demande d'ouverture provenant du client de l'utilisateur.

La session est établie entre l'utilisateur et le système cible à travers un réseau de communication.

L'agent transitoire surveille la session, recueille des données d'événements qui se produisent sur le système cible au cours de la session.

L'agent transitoire est désinstallé lorsque la session se termine.

### Inconvénients de l'art antérieur

La solution proposée par la demande EP2894814 prévoit une étape d'installation, par exemple par une commande PsExec, nécessitant des connexions réseaux additionnels et des privilèges particuliers sur le serveur cible.

Par ailleurs, il est nécessaire de procéder à une étape spécifique de désinstallation de l'agent, pour éviter que son exécution hors session ne consomme inutilement des capacités de calcul du serveur.

### Solution apportée par l'invention

Le but de la présente invention est de remédier à ces inconvénients en proposant une solution plus simple et plus sure, évitant notamment une étape expresse de désinstallation. La solution objet de la présente invention évite également des failles de sécurité.

L'invention concerne selon son acception la plus générale un procédé de connexion sécurisé, depuis un équipement informatique client, à une ressource informatique cible comprenant un serveur, et le cas échéant une application exécutée sur ledit serveur, mettant en oeuvre une passerelle mandataire comprenant une mémoire pour l'enregistrement des informations relative à ladite connexion ainsi qu'au moins un agent exécutable sur ledit serveur pendant une session, le procédé comprenant les étapes suivantes :
- l'émission d'une requête d'ouverture de session par une application installée sur le poste client, entraînant la création d'une session primaire entre le poste client et la passerelle mandataire. Ladite requête peut contenir l'identifiant du serveur cible ou de l'application cible.
- l'ouverture d'une session entre ladite passerelle mandataire et ledit serveur

Ledit procédé est caractérisé en ce que
- ladite étape d'installation d'au moins un agent est exécutée comprenant successivement :
   ∘ ladite l'étape d'ouverture d'une session secondaire entre ladite passerelle mandataire et ledit serveur, ladite étape comprenant la mise en place de la redirection d'un disque émulé par la passerelle mandataire sur lequel est enregistré ledit agent,
   ∘ l'exécution d'un script de temporisation qui attend que ledit disque émulé soit disponible,
   ∘ la copie de l'agent vers un répertoire. Ce répertoire peut être avantageusement un répertoire temporaire situé sur le serveur. La destruction automatique dudit répertoire par ledit server à la fin de la session rend inutile une étape spécifique de désinstallation de l'agent.
   ∘ l'exécution de l'agent sur ledit serveur
   ∘ l'établissement d'un canal virtuel entre le serveur et la passerelle pour la communication entre l'agent et la passerelle
   ∘ ensuite, l'ouverture d'un canal montant entre le poste client et le serveur.

Le procédé comprend également le lancement par l'agent d'une application préalablement sélectionnée par l'utilisateur, le cas échéant celle-ci pouvant être le gestionnaire de bureau si aucune application n'a été sélectionnée par l'utilisateur.

Selon une variante, le procédé selon l'invention comporte une étape préalable de sélection d'une ressource cible, par la transmission par le terminal client d'un message numérique comportant un identifiant d'un utilisateur, et de vérification par ladite passerelle si les informations relatives aux droits d'utilisation associés audit identifiant dans une base de données (302) concernent ladite ressource cible.

Avantageusement, il comporte une étape préalable de sélection d'une ressource cible, consistant à la transmission par la passerelle de données numériques comprenant la liste des cibles correspondant aux données enregistrées dans une base de données (302) en relation avec l'identifiant transmis, et la sélection par l'utilisateur de l'une des cibles proposées.

Avantageusement, ladite base de données (302) comprend une liste des applications et des serveurs hébergeant chacune desdites applications, ainsi que les comptes permettant de se connecter à ces serveurs.

De préférence, ladite passerelle comporte des moyens pour le calcul d'une balance des charges en fonction du nombre de connexions déjà ouvertes vers chacun des serveurs, et de sélection pour la nouvelle requête le serveur le moins sollicité.

Selon un mode de réalisation avantageux, le procédé comporte une étape d'exécution d'un code informatique pour :
- interroger la passerelle en vue d'obtenir les informations d'authentification correspondant au compte de l'application,
- injecter ces données dans l'application afin d'ouvrir une session applicative et permettre à l'utilisateur d'utiliser ladite application.

Selon une première variante, ledit code est installé sur le serveur (500) de manière permanente et en ce que le chemin d'accès à ce code est défini dans la base de données (302).

Selon une deuxième variante, ledit code est transmis transitoirement, par un canal dédié prévu dans le protocole multicanal (400), pour être exécuté transitoirement sur le serveur (500).

### Description détaillée d'un exemple non limitatif de réalisation

La présente invention sera mieux comprise à la lecture de la description qui suit, se référant à des exemples non limitatifs de réalisation, illustrés par les dessins annexés où :
- la figure 1 représente un schéma de l'architecture fonctionnelle de l'invention
- la figure 2 représente un schéma de l'architecture fonctionnelle d'une variante de réalisation de l'invention
- la figure 3 représente une vue schématique des étapes du processus et des données échangées entre les différentes ressources informatiques.

### Architecture fonctionnelle

L'utilisateur est un administrateur réseau ou système disposant de droits limités d'administration, pour un ensemble de ressources dont il a la charge.

Il dispose d'un terminal (100) communiquant avec la passerelle mandataire (300) (ou « passerelle d'administration ») par l'intermédiaire d'une connexion (200) selon un protocole par exemple SSH (« secure shell ») ou RDP (« remote desktop protocol»).

La connexion entraîne la création d'une session primaire (301) sur la passerelle (300).

L'utilisateur est identifié par des identifiants numériques qui lui sont propres, et définissant ses droits, ainsi que l'imputation des actions qu'il effectue.

La passerelle (300) comporte une base de données (302) dans laquelle sont enregistrés les identifiants des utilisateurs autorisés ainsi que les droits associés, définissant les cibles (comptes et équipements) sur lesquelles l'utilisateur est en droit d'agir.

Lors de la connexion, deux modes de sélection de la ressource sont possibles :
- selon le premier mode, l'utilisateur précise, lors de la connexion, la cible à laquelle il veut accéder. Dans ce cas la passerelle vérifie si l'utilisateur identifié par son identifiant dispose des autorisations nécessaires pour accéder à cette cible, en fonction des informations enregistrées dans la base de données (302).
- Selon le deuxième mode, la passerelle transmet à l'utilisateur la liste des cibles correspondant aux données enregistrées dans la base de données (302) en relation avec l'identifiant transmis, pour permettre à l'utilisateur de sélection l'une des cibles proposées.

L'étape suivante consiste à ouvrir une connexion, généralement avec le même protocole SSH ou RDP, ou encore avec un deuxième protocole; avec le compte associé à la cible sélectionnée. Cette étape comprend successivement :
∘ ladite l'étape d'ouverture d'une session secondaire entre ladite passerelle mandataire et ledit serveur, ladite étape comprenant-la mise en place de la redirection d'un disque émulé par la passerelle mandataire sur lequel est enregistré ledit agent,
∘ l'exécution d'un script de temporisation qui attend que ledit disque émulé soit disponible
∘ la copie de l'agent vers un répertoire temporaire situé sur le serveur. La destruction automatique dudit répertoire par ledit server à la fin de la session rend inutile une étape spécifique de désinstallation de l'agent.
∘ l'exécution de l'agent sur ledit serveur
o l'établissement d'un canal virtuel entre le serveur et la passerelle pour la communication entre l'agent et la passerelle
o ensuite, l'ouverture d'un canal montant entre le poste client et le serveur.

Lorsque la cible est une application, la passerelle (300) choisi le serveur (500) adéquat à l'exécution de ladite application. A cet effet, la base de données (302) comprend une liste des applications et des serveurs hébergeant chacune desdites applications, ainsi que les comptes permettant de se connecter à ces serveurs.

Lorsque plusieurs serveurs hébergent une même application, la passerelle réalise une balance des charges en fonction du nombre de connexions déjà ouvertes vers chacun des serveurs, et sélectionne pour la nouvelle requête le serveur le moins sollicité.

De même, en absence de réponse par un serveur hébergeant une application, la passerelle recherche successivement les autres serveurs hébergeant la même application, pour sélectionner une cible disponible.

Le procédé comprend également le lancement par l'agent d'une application préalablement sélectionnée par l'utilisateur, le cas échéant celle-ci pouvant être le gestionnaire de bureau si aucune application n'a été sélectionnée par l'utilisateur. Le lancement d'une application peut être délégué si nécessaire à un code informatique spécialisé pour :
- interroger la passerelle en vue d'obtenir les informations d'authentification correspondant au compte de l'application, par exemple un mot de passe ou un certificat cryptographique, ou un ticket Kerberos
- injecter ces données dans l'application afin d'ouvrir une session applicative et permettre à l'utilisateur d'utiliser ladite application.

Ce code peut être :
- installé sur le serveur (500) de manière permanente. Dans ce cas, le chemin d'accès à ce code est défini dans la base de données (302)
- ou transmis transitoirement, par un canal dédié prévu dans le protocole multicanal (400), pour être exécuté transitoirement sur le serveur (500).

Le nom de ce code peut être généré de manière unique, afin de rendre plus difficile l'altération de ce code pendant l'exécution de l'application, par une attaque informatique.

Ce code installé transitoirement peut également comporter un jeton unique afin de réduire les risques d'accès non autorisé aux données enregistrées dans la base (302), au moyen de la session ouverte, par un attaquant ayant accès au serveur (500).

### Accès concurrent à des applications sur un même serveur par plusieurs utilisateurs.

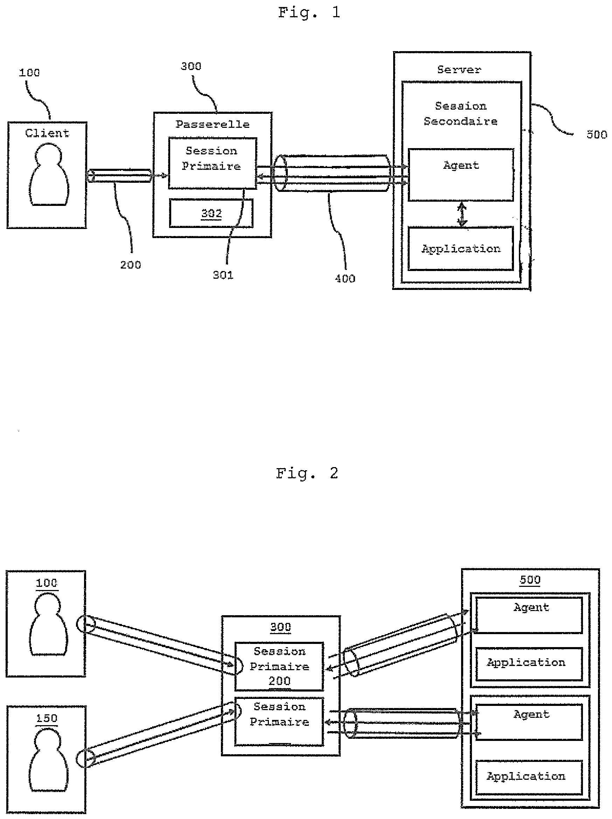

La figure 2 représente un schéma fonctionnel d'une solution permettant à plusieurs utilisateurs d'accès à des applications hébergées sur un même serveur. Le but est d'éviter les interférences entre les sessions, et de les rendre étanches en terme de sécurité.

A cet effet, lorsqu'un second utilisateur (150) cherche à exécuter une application hébergée sur le même serveur (500) qu'une application exécutée pour un premier utilisateur (100), la passerelle (300) inhibera les données de la base (302) relatives au compte utilisé par le premier utilisateur (100), sur le serveur (500). Elle n'autorisera l'exécution d'une application sur ce même serveur (500) que si un compte reste disponible pour un second utilisateur (150).

### Données échangées entre les ressources informatiques

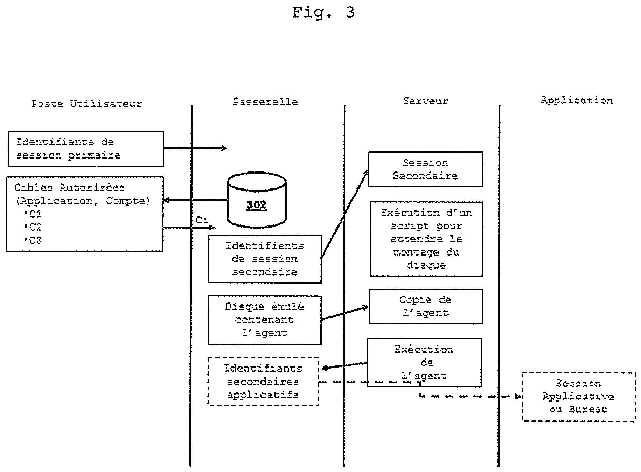

La figure 3 représente une vue schématique des données échangées entre les différentes ressources informatiques.

Lors de la connexion par un utilisateur, le terminal (100) transmet à la passerelle mandataire (300) les identifiants numériques primaires.

Ces données d'authentification sont vérifiées par la passerelle (300), en fonction des informations enregistrées dans sa base de données (302).

En cas de validation, la passerelle (302) transmet la liste des cibles autorisées (C1 à C3).

Chaque cible correspond à un couple :
- application
- compte associé à l'application.

Le compte comprend :
- une information d'identification
- une information d'authentification, telle qu'un mot de passe.

La passerelle transmet à l'utilisateur (100), pour chacune des cibles autorisées, seulement la désignation de l'application et la désignation de l'identifiant du compte, mais pas l'information d'authentification, sous la forme de chaines de caractères désignant les couples application/compte.

L'utilisateur (100) sélectionne l'une des cibles proposées et en transmet l'identifiant à la passerelle (300).

La passerelle (300) choisit un serveur, et un compte pour ouvrir une session sur ledit serveur (500) selon le processus de sélection du serveur et du compte préalablement décrit.

Elle ouvre ainsi une session secondaire, sur le serveur. Cette session présente un disque émulé par la passerelle. Ce disque comporte un agent. Puis la passerelle recopie et démarre l'agent selon le procédé préalablement décrit. Celui-ci démarre le gestionnaire de bureau ou dans le cas où l'utilisateur a sélectionné une application spécifique, il procède à son exécution soit directement soit au moyen d'un code informatique spécialisé. Ce code demande à la passerelle l'identifiant du compte de l'application ainsi que les données d'authentification associées à ce compte.

Le code informatique transmet alors ces informations à l'application pour commander l'exécution de l'application.

## Revendications

1. Procédé de connexion sécurisé, depuis un équipement informatique client, à une ressource informatique cible comprenant un serveur, et le cas échéant une application exécutée sur ledit serveur, mettant en oeuvre une passerelle mandataire comprenant une mémoire pour l'enregistrement des informations relative à ladite connexion ainsi qu'au moins un agent exécutable sur ledit serveur pendant une session, le procédé comprenant les étapes suivantes :
- l'émission d'une requête d'ouverture de session par une application installée sur le poste client, entraînant la création d'une session primaire entre le poste client et la passerelle mandataire. Ladite requête peut contenir l'identifiant du serveur cible ou de l'application cible.
- l'ouverture d'une session entre ladite passerelle mandataire et ledit serveur
ledit procédé étant **caractérisé en ce que**
- ladite étape d'émission d'une requête est mise en oeuvre par l'ouverture préalable d'une session primaire [RDP] entre le poste client et la passerelle mandataire par l'envoi d'un message comprenant l'identifiant du serveur cible ou de l'application cible
- ladite étape d'installation d'au moins un agent est exécutée comprenant successivement :
∘ ladite l'étape d'ouverture d'une session secondaire entre ladite passerelle mandataire et ledit serveur, ladite étape comprenant la mise en place de la redirection d'un disque émulé par la passerelle mandataire sur lequel est enregistré ledit agent,
∘ l'exécution d'un script de temporisation qui attend que ledit disque émulé soit disponible.
∘ la copie de l'agent vers un répertoire situé sur le serveur.
∘ l'exécution de l'agent sur ledit serveur
∘ l'établissement d'un canal virtuel entre le serveur et la passerelle pour la communication entre l'agent et la passerelle
∘ ensuite, l'ouverture d'un canal montant entre le poste client et le serveur.
∘ finalement l'agent lance le gestionnaire de bureau ou l'application cible en lui injectant les identifiants applicatifs nécessaires transmis par la passerelle.

2. Procédé de connexion sécurisé selon la revendication 1 **caractérisé en ce qu'**il comporte une étape de destruction automatique dudit répertoire par ledit server à la fin de la session.

3. Procédé de connexion sécurisé selon la revendication 1 **caractérisé en ce que** l'agent est exécuté au sein de la session avec l'identité utilisée pour l'ouverture de la session.

4. Procédé de connexion sécurisé selon la revendication 1 **caractérisé en ce que** qu'il comporte une étape préalable de sélection d'une ressource cible, par la transmission par le terminal client d'un message numérique comportant un identifiant d'un utilisateur, et de vérification par ladite passerelle si les informations relatives aux droits d'utilisation associés audit identifiant dans une base de données (302) concernent ladite ressource cible.

5. Procédé de connexion sécurisé selon la revendication 1 **caractérisé en ce que** qu'il comporte une étape préalable de sélection d'une ressource cible, consistant à la transmission par la passerelle des données numériques comprenant la liste des cibles correspondant aux données enregistrées dans une base de données (302) en relation avec l'identifiant transmis, et de sélection par l'utilisateur de l'une des cibles proposées.

6. Procédé de connexion sécurisé selon la revendication 4 ou 5 **caractérisé en ce que** ladite base de données (302) comprend une liste des applications et des serveurs hébergeant chacune desdites applications, ainsi que les comptes permettant de se connecter à ces serveurs.

7. Procédé de connexion sécurisé selon la revendication 1 **caractérisé en ce que** qu'il comporte une étape d'ouverture d'une connexion avec le compte associé à la cible sélectionnée.

8. Procédé de connexion sécurisé selon la revendication 1 **caractérisé en ce que** ladite passerelle comporte des moyens pour le calcul d'une balance des charges en fonction du nombre de connexions déjà ouvertes vers chacun des serveurs, et de sélection pour la nouvelle requête le serveur le moins sollicité.

9. Procédé de connexion sécurisé selon la revendication 1 **caractérisé en ce qu'**il comporte une étape d'exécution d'un code informatique pour :
- interroger la passerelle en vue d'obtenir les informations d'authentification correspondant au compte de l'application,
- injecter ces données dans l'application afin d'ouvrir une session applicative et permettre à l'utilisateur d'utiliser ladite application.

10. Procédé de connexion sécurisé selon la revendication précédente **caractérisé en ce que** ledit code est installé sur le serveur (500) de manière permanente et **en ce que** le chemin d'accès à ce code est défini dans la base de données (302).

11. Procédé de connexion sécurisé selon la revendication 9 **caractérisé en ce que** ledit code est transmis transitoirement, par un canal dédié prévu dans le protocole multicanal (400), pour être exécuté transitoirement sur le serveur (500).

## Patentansprüche

1. Verfahren zur Herstellung einer gesicherten Verbindung von der EDV-Ausstattung eines Kunden aus zu einer EDV-Zielressource mit Server und gegebenenfalls einer Anwendung, die auf besagtem Server ausgeführt wird, bei dem ein Proxy-Gateway mit einem Speicher zur Speicherung von Daten der besagten Verbindung eingesetzt wird, sowie mindestens ein Agent, der auf besagtem Server während einer Sitzung ausführbar ist, wobei das Verfahren die folgenden Schritte umfasst:
- das Übertragen einer Sitzungsanforderung durch eine auf der Kundenausrüstung installierte Anwendung, was zur Herstellung einer primären Sitzung zwischen dem Kundengerät und dem Proxy-Gateway führt. Besagte Anforderung kann die Kennung des Zielservers oder der Zielanwendung enthalten.
- das Öffnen einer Sitzung zwischen besagtem Proxy-Gateway und besagtem Server, wobei besagtes Verfahren **dadurch gekennzeichnet ist, dass**
- besagter Schritt der Übertragung einer Anforderung vorab durch das Öffnen einer ersten Sitzung [RDP] zwischen dem Kundengerät und dem Proxy-Gateway durch Senden einer Nachricht mit der Kennung des Zielservers oder der Zielanwendung erfolgt,
- der Schritt der Installation von mindestens einem Agenten mit mindestens folgender Schrittabfolge umgesetzt wird:
∘ besagter Schritt des Öffnens einer sekundären Sitzung zwischen dem besagtem Proxy-Gateway und besagtem Server, wobei besagter Schritt die Einrichtung einer Umleitung einer emulierten Platte über das Proxy-Gateway, auf welchem besagter Agent gespeichert ist, umfasst,
∘ die Ausführung eines Timeout-Scripts, das darauf wartet, dass besagte emulierte Platte verfügbar ist,
∘ das Kopieren des Agenten in ein Verzeichnis, das sich auf dem Server befindet,
∘ die Ausführung des Agenten auf besagtem Server,
∘ die Herstellung eines virtuellen Kanals zwischen Server und Gateway zwecks Kommunikation zwischen Agent und Gateway,
∘ anschließend das Öffnen eines Uplinks zwischen Kundengerät und Server,
∘ schließlich das Starten des Desktop-Managers oder der Ziel-Anwendung durch den Agenten und das Zuführen der über das Gateway übermittelten erforderlichen Kennungen der Anwendungen.

2. Verfahren zur Herstellung einer gesicherten Verbindung nach Anspruch 1, **dadurch gekennzeichnet, dass** es einen Schritt der automatischen Löschung des besagten Verzeichnisses durch besagten Server am Ende der Sitzung umfasst.

3. Verfahren zur Herstellung einer gesicherten Verbindung nach Anspruch 1, **dadurch gekennzeichnet, dass** der Agent während der Verbindung mit der Identität ausgeführt wird, die zum Öffnen der Sitzung benutzt wird.

4. Verfahren zur Herstellung einer gesicherten Verbindung nach Anspruch 1, **dadurch gekennzeichnet, dass** es vorab einen Schritt der Auswahl einer Ziel-Ressource durch die Übertragung einer digitalen Nachricht mit einer Kennung eines Benutzers über das Kundenterminal sowie der Überprüfung durch das Gateway umfasst, wenn die Informationen zu den Benutzerrechten, die mit besagter Kennung in einer Datenbank (302) verknüpft sind, besagte Ziel-Ressource betreffen.

5. Verfahren zur Herstellung einer gesicherten Verbindung nach Anspruch 1, **dadurch gekennzeichnet, dass** es vorab einen Schritt der Auswahl einer Ziel-Ressource umfasst, der darin besteht, dass die digitalen Daten mit der Liste der Ziele, welche den in einer Datenbank (302) in Bezug auf die übermittelte Kennung gespeicherten Daten entsprechen, über das Gateway übermittelt werden und der Benutzer eines der angebotenen Ziele auswählt.

6. Verfahren zur Herstellung einer gesicherten Verbindung nach Anspruch 4 oder 5, **dadurch gekennzeichnet, dass** besagte Datenbank (302) eine Liste von Anwendungen sowie von Servern, die jede der besagten Anwendungen hosten, umfasst, sowie die Konten, die das Verbinden mit diesen Servern ermöglichen.

7. Verfahren zur Herstellung einer gesicherten Verbindung nach Anspruch 1, **dadurch gekennzeichnet, dass** es einen Schritt der Herstellung einer Verbindung zu dem mit dem ausgewählten Ziel verknüpften Konto umfasst.

8. Verfahren zur Herstellung einer gesicherten Verbindung nach Anspruch 1, **dadurch gekennzeichnet, dass** besagtes Gateway Mittel zur Berechnung einer Lastverteilung unter Berücksichtigung der Anzahl der bereits zu jedem der Server hergestellten Verbindungen umfasst, und Mittel zur Auswahl des am wenigsten beanspruchten Servers für die neue Anforderung.

9. Verfahren zur Herstellung einer gesicherten Verbindung nach Anspruch 1, **dadurch gekennzeichnet, dass** es einen Schritt der Ausführung eines Computercodes umfasst, um:
- das Gateway zwecks Erhalt der Authentifizierungsdaten für das Anwendungskonto abzufragen,
- diese Daten der Anwendung zuzuführen, um eine Anwendungsverbindung herzustellen und dem Benutzer die Benutzung besagter Anwendung zu ermöglichen.

10. Verfahren zur Herstellung einer gesicherten Verbindung nach dem vorhergehenden Anspruch, **dadurch gekennzeichnet, dass** besagter Code auf dem Server (500) dauerhaft installiert wird und dadurch, dass der Zugangspfad zu diesem Code in der Datenbank (302) definiert wird.

11. Verfahren zur Herstellung einer gesicherten Verbindung nach Anspruch 9, **dadurch gekennzeichnet, dass** besagter Code übergangsweise über einen speziellen, im Mehrkanalprotokoll (400) vorgesehenen Kanal übermittelt wird, um übergangsweise auf dem Server (500) ausgeführt zu werden.

## Claims

1. A method for secure connection, from a client computer device, to a target computer resource comprising a server, and if necessary an application running on said server, implementing a proxy gateway comprising a memory for recording information on said connection and at least one agent executable on said server during a session, the method comprising the steps of:
- the emission of a session-opening request by an application installed on the client station, leading to the creation of a primary session between the client station and the proxy gateway. Said request can contain the identifier of the target server or of the target application
- the opening of a session between said proxy gateway and said server,
with said method being **characterized in that**
- said request-emission step is implemented by the prior opening of a primary session [RDP] between the client station and the proxy gateway by the transmission of a message containing the identifier of the target server or of the target application.
- said step of installing at least one agent is carried out successively comprising:
∘ said step of opening a secondary session between said proxy gateway and said server, said step comprising the establishment of the redirection of an emulated disk by the proxy gateway having recorded said agent thereon,
∘ performing a delay script that waits for said emulated disk to be available,
∘ copying the agent to a directory existing on the server.
∘ running the agent on said server
∘ establishing a virtual channel between the server and the gateway for the communication between the agent and the gateway
∘ then, opening an uplink channel between the client station and the server,
∘ finally the agent launches the office manager or the target application by injecting therein the necessary application identifiers transmitted by the gateway.

2. A method for secure connection according to claim 1, **characterized in that** it comprises a step of automatic destruction of said directory by said server at the end of the session.

3. A method for secure connection according to claim 1, **characterized in that** the agent is running within the session with the identity used for opening the session.

4. A method for secure connection according to claim 1, **characterized in that** it comprises a prior step of selecting a target resource, through the transmission by the client terminal of a digital message including a user's identifier, and of said gateway checking that the information relative to usage rights associated with said identifier in a database (302) relate to said target resource.

5. A method for secure connection according to claim 1, **characterized in that** it comprises a prior step of selecting a target resource, which consists of the transmission by the gateway of the digital data comprising the list of the targets corresponding to the data recorded in a database (302) in relation with the transmitted identifier, and of the selection, by the user, of one of the proposed targets.

6. A method for secure connection according to claim 4 or 5, **characterized in that** said database (302) comprises a list of the applications and of the servers hosting each of said applications, as well as the accounts for connecting to these servers.

7. A method for secure connection according to claim 1, **characterized in that** it comprises a step of opening a connection with the account associated with the selected target.

8. A method for secure connection according to claim 1, **characterized in that** said gateway includes means for computing a load balance according to the number of connections already open to each of the servers, and for selecting, for the new request, the less contacted server.

9. A method for secure connection according to claim 1, **characterized in that** it comprises a step of executing a computer code for:
- interrogating the gateway in order to obtain the authentication information corresponding to the account of the application,
- injecting such data into the application in order to open an application session and enable the user to use said application.

10. A method for secure connection according to the preceding claim, **characterized in that** said code is permanently installed on the server (500) and **in that** the access path to this code is defined in the database (302).

11. A method for secure connection according to claim 9, **characterized in that** said code is transiently transmitted, through a dedicated channel provided in the multi-channel protocol (400), to be transiently run on the server (500).
